# EUROPÄISCHE PATENTSCHRIFT

(11) **EP 1 757 849 B1**
(45) Veröffentlichungstag und Bekanntmachung des Hinweises auf die Patenterteilung: **20.03.2013**
(21) Anmeldenummer: 06017103.0
(22) Anmeldetag: 17.08.2006
(51) Int. Cl.: F16J 15/32

(54) **Verfahren und Einrichtung zur Rückdrehung von ringförmingen teilverdrehten flexiblen Gummi- oder Kunststoffringen**
Metod and device for detwisting partially twisted rubber or plastic flexible rings
Procédé et dispositif pour dévriller des anneaux flexibles de caoutchouc ou plastique partiellement vrillés

(30) Priorität: 23.08.2005 DE 102005039716
(43) Veröffentlichungstag der Anmeldung: 28.02.2007
(73) Patentinhaber: M.O.L. GUMMIVERARBEITUNG GMBH & Co. KG, 49377 Vechta (DE)
(72) Erfinder: Lüers, Gregor, 49424 Lutten (DE)
(74) Vertreter: Meyer, Ludgerus

(56) Entgegenhaltungen:
- DE-U1- 29 612 760
- JP-A- 8 198 433
- JP-A- 62 100 313
- JP-A- 62 126 020

## Beschreibung

Die Erfindung betrifft ein Verfahren zur Rückdrehung von ringförmigen teilverdrehten flexiblen Gummi- oder Kunststoffringen nach dem Oberbegriff des Anspruchs 1 sowie eine Einrichtung zur Durchführung eines derartigen Verfahrens nach dem Oberbegriff des Anspruchs 8.

Zur Abdichtung von Kanalisationsrohren werden vielfach Dichtungsringe verwendet, die in einfachster Ausführung einen runden Querschnitt haben, aber auch vielfach mit einer oder mehreren Lippendichtungen versehen sind, so dass ihre Querschnittsform stark strukturiert ist und von einer Kreisform erheblich abweicht. Solche Dichtungsringe bestehen in der Regel aus Gummi und werden mit geeigneten Fertigungseinrichtungen in großer Stückzahl gefertigt. Standardisierte Durchmesser sind beispielsweise 50 mm oder 100 mm.

Nach der Fertigstellung der Dichtringe werden diese in der Regel in Gitterboxen abgelegt, um sie später zu vereinzeln oder weiteren Verarbeitungsschritten, einschließlich dem Einsetzen in Nuten von Abwasserrohren, zuzuführen. Es tritt dabei immer wieder das Problem auf, dass einzelne oder eine größere Zahl von hergestellten Dichtungsringen in sich verdreht sind, d.h. eine Seite des Ringes ist um 360° gegenüber der anderen Seite des Ringes verdreht, wobei die Drehung der Seiten ineinander übergeht. Abhängig von der Querschnittsform solcher Ringe ist ein derartiger Verdrehzustand mehr oder weniger stabil. Zur Verwendung solcher Ringe müssen diese in ihre stabile umlaufend gleichförmige Stellung zurückgedreht werden. Eine entsprechende manuelle Tätigkeit ist kostenintensiv und sollte vermieden werden.

Aus der JP 08198433 A ist eine Einrichtung zur Aufnahme und Übergabe von Gummi- oder Kunststoffringen auf eine Fördereinrichtung bekannt, bei der in einer ersten Position eines Schwenkarms ein Satz Ringe vertikal auf einen mit einem Schraubgewinde versehenen Dorn überführt wird und in einer zweiten Stellung des Schwenkarms, in der der Dorn horizontal gerichtet ist, durch schnelle Drehung des Dorns eine Vereinzelung der Ringe erfolgt. Bei Verlassen des Dorns fallen die Ringe in einen Auffangbehälter und werden von dort einzeln auf eine Fördereinrichtung überführt.

Der Erfindung liegt die Aufgabe zugrunde, ein Verfahren zur Rückdrehung von ringförmigen teilverdrehten flexiblen Gummi- oder Kunststoffringen, insbesondere Dichtungsringen für Abwasserrohre anzugeben, das eine einfache Rückdrehung solcher Ringe ermöglicht und in einen betrieblichen Fertigungsprozess eingebunden werden kann. Der Erfindung liegt ferner die Aufgabe zugrunde, eine Einrichtung zur Durchführung eines derartigen Verfahrens anzugeben.

Das erfindungsgemäße Verfahren ist dadurch gekennzeichnet, dass die teilverdrehten Ringe mittels eines exzentrisch zur Ringachse angeordneten Drehantriebs so lange in eine Schleuderdrehung versetzt werden, bis die eine stabile, umlaufend gleichförmige Grundstellung erreicht haben.

Insbesondere werden die Ringe dazu auf einen horizontal verlaufenden Drehstab aufgehängt, der dann motorisch betätigt wird, so dass die Ringe von dem Drehstab so in Drehung versetzt werden, dass sie bei geeignet hoher Drehzahl in der Ringebene gestreckt werden. Diese Streckung führt dazu, dass die Ringe in ihre stabile, umlaufend gleichförmige Stellung "zurückspringen°.

Vorzugsweise schlagen die Ringe während des Schleuderns gegen eine Anschlagkante, die beispielsviieise als Stab oder Wand ausgebildet sein kann, so dass die Schlagwirkung auf die Ringe die Rückdrehung unterstützt und dadurch innerhalb kurzer Zeit eine Rückdrehung der Ringe erreicht ist.

Der Drehantrieb ist als ein Drehstab mit gegenüber dem Innendurchmesser der Ringe kleinem Außendurchmesser ausgebildet, auf den eine Anzahl von Ringen parallel zueinander überführt und durch Drehung in eine Schleuderbewegung versetzt werden. Dadurch können gleichzeitig abhängig von der Länge des Stabes eine Vielzahl von Ringen bearbeitet werden. In einem ausgeführten Beispiel können in einem Arbeitsgang etwa 50 Ringe gleichzeitig geschleudert werden.

Um die Mitnahmewirkung des Drehstabes gegenüber den Ringen zu erhöhen, kann der Querschnitt des Stabes insbesondere stabförmig, dreieckförmig, vieleckförmig oder oval ausgebildet sein. Der Drehstab kann auch exzentrisch angetrieben werden, oder es kann eine erhöhte Rauhigkeit des Drehstabes verwendet werden, um den Schlupf zwischen Drehstab und Ringen zu verringern.

Vorzugsweise werden die Ringe mit einer Drehzahl von 500 bis 1500 Umdrehungen pro Minute geschleudert. Die Zeitdauer des Schleuderns beträgt vorzugsweise 10 bis 30 Sekunden. Nach dieser Zeit und der angegebenen Drehzahl sind praktisch 100 Prozent aller verdrehten Ringe zurückgedreht und geordnet nebeneinander aufgereiht.

Die erfindungsgemäße Einrichtung verwendet einen motorisch angetriebenen Drehstab, der insbesondere horizontal ausgerichtet ist, auf den die Ringe zu ihrer Entwirrung von der freien Seite des einseitig gelagerten Drehstabes aufgeschoben werden. Parallel zur Welle befindet sich die Anschlagkante, gegen die die Ringe während des Herumschleuderns anstoßen. Der Drehstab befindet sich vorzugsweise unmittelbar am Abgabeende einer Fertigungseinrichtung zur Herstellung der Dichtringe, so dass die Dichtringe unmittelbar aus einer Fertigungseinrichtung auf den Drehstab zur Entwirrung aufgebracht werden können, ohne dass eine Zwischenlagerung in Gitterboxen erforderlich ist.

Zur Erhöhung der Gleitfähigkeit von Dichtungsringen werden diese üblicherweise mit einer Silikonbeschichtung versehen. Die Erfindung ermöglicht es gleichzeitig auch, die Silikonbeschichtung während des Herumschleuderns der Ringe aufzubringen, so dass dadurch ein zusätzlicher Arbeitsgang entfallen kann.

Des weiteren kann vorgesehen sein, dass die Anschlagkante mit einer rauhen Oberfläche, ähnlich einem Schleifpapier, versehen ist, um zu ermöglichen, dass die Ringe während des Herumschleuderns an ihrer Außenseite so bearbeitet werden, dass mögliche Grate, die bei der Fertigung verblieben sind, während des Herumschleuderns entfernt werden können.

Nach dem Entwirren und ggf. Behandeln der Ringe können diese vorzugsweise mittels einer parallel an den Drehstab herangeführten Spindel, in deren Schraubenvertiefung die Ringe eingreifen, durch Drehung der Spindel von dem Drehstab abgezogen werden. Dadurch kann der Automatisierungsgrad der Fertigungseinrichtung weiter erhöht werden.

Die Erfindung wird nachstehend anhand eines Ausführungsbeispiels näher erläutert. Es zeigen:
- Fig. 1: einen verdrehten Ring in Aufsicht,
- Fig. 2: einen verdrehten Ring in Seitenansicht,
- Fig. 3: eine schematische Ansicht einer Einrichtung zur Rückdrehung von Dichtungsringen,
- Fig. 4: eine Schnittansicht durch eine Einrichtung von Fig. 3,
- Fig. 5: eine Ansicht von Fig. 4 in Betriebsansicht, und
- Fig. 6: eine Ansicht ähnlich Fig. 3 mit einer zusätzlichen Abzugseinrichtung.

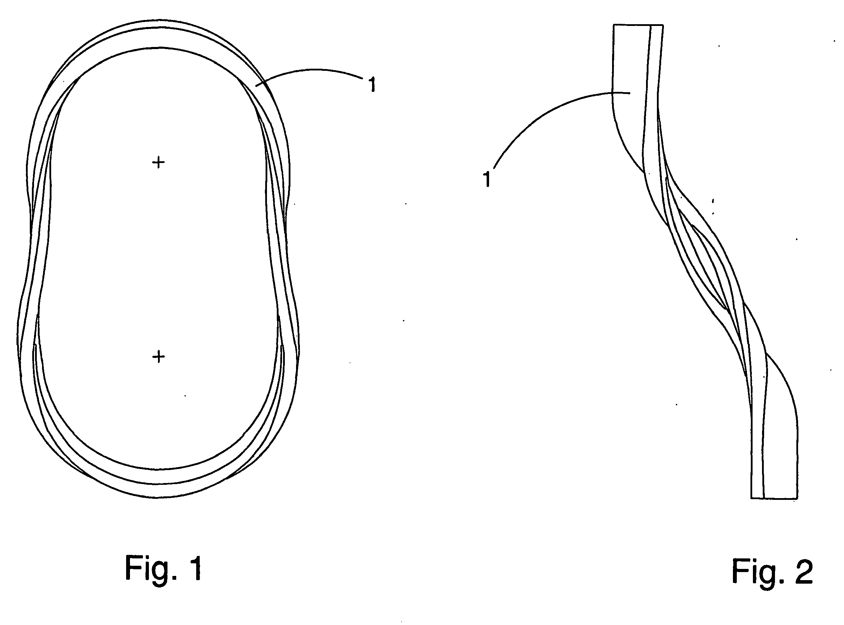

Fig. 1 zeigt einen üblichen Dichtungsring 1 für ein Kanalisationsrohr, z.B. des Durchmessers 100 mm. Dieser Ring weist im Querschnitt eine stark strukturierte Form auf, die leicht dazu führt, dass entsprechend hergestellte Ringe in sich verdreht sind. Der untere Bereich des in Fig. 1 dargestellten Rings ist daher gegenüber dem oberen Bereich entlang der Umlaufachse um 360° gedreht. Bei Ringen mit sehr großem Durchmesser ist es sogar möglich, dass ein Ring um zweimal 360° in sich gedreht ist. Auch solche Ringe lassen sich mit dem erfindungsgemäßen Verfahren zurückdrehen.

Fig. 2 zeigt einen Ring 1 von Fig. 1 in Seitenansicht, welche die schraubenförmige Drehung des Ringes deutlich darstellt.

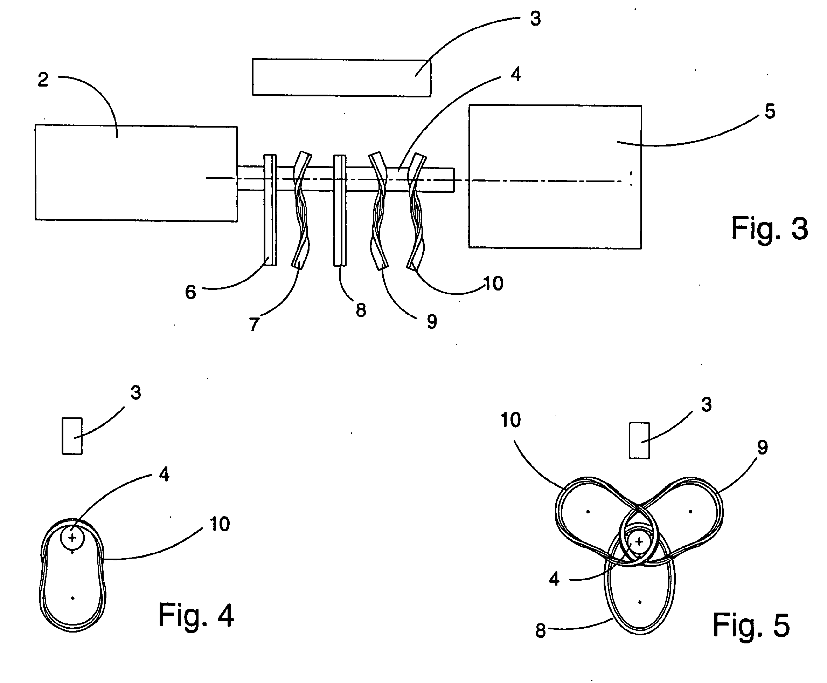

Fig. 3 zeigt eine Seitenansicht einer Einrichtung zur Durchführung des erfindungsgemäßen Verfahrens. Es ist ein einseitig an die Welle eines Motors 2 angeflanschter Drehstab 4 vorgesehen, auf den eine Anzahl von Ringen hängend aufgeschoben werden kann. Die Figur zeigt zwei Ringe 6 und 8, die ihre stabile Grundstellung besitzen, während die Ringe 7, 9 und 10 eine verdrehte Form besitzen.

Parallel zum Drehstab 4 befindet sich eine Anschlagkante 3. Diese kann nahezu beliebigen Querschnitt haben oder auch als Wand ausgebildet sein. Der Drehstab 4 ist insbesondere stab-, dreieck-, viereck-, vieleckförmig oder oval (in Form eines Paddels) ausgebildet, so dass sich eine gute Mitnahmewirkung ergibt, wenn der Drehstab 4 in Drehung versetzt wird. Sobald die Drehzahl des Drehstabes 4 einen bestimmten Wert erreicht hat, werden die Ringe mit der Drehzahl des Drehstabes mitgenommen und herumgeschleudert, wobei ihre Außenseiten gegen die Anschlagkante 3 anschlagen. Dabei wird ihre nicht besonders stabile Verdrehstellung so beeinflusst, dass sie in ihre Grundstellung "zurückspringen". Wenn der Drehstab 4 für etwa 10 bis 30 sec bei einer Drehzahl von 500 bis 1500 Umdrehungen pro Minute angetrieben wird, sind nach Ablauf dieser Zeit in der Regel sämtliche verdrehten Dichtungsringe zurückgedreht. Nach Stillstand des Motors 2 können die Dichtungen 6 bis 10 dann vom freien Ende des Drehstabes 4 abgenommen und den weiteren Verarbeitungsschritten zugeführt werden.

Die zurückzudrehenden Ringe können per Hand auf den Drehstab 4 aufgeschoben werden. Es kann jedoch auch vorgesehen sein, dass der Drehstab 4 unmittelbar an das Ausgangsende einer Fertigungseinrichtung 5 angesetzt wird, so dass aus einer Fertigungseinrichtung 5 herausgeführte Ringe unmittelbar auf den Drehstab 4 überführt werden, ohne dass eine Zwischenlagerung erforderlich ist.

Fig. 4 zeigt eine Seitenansicht der Einrichtung von Fig. 3 mit einem auf dem Drehstab 4 hängenden Ring 10 und einer Anschlagkante 3.

Fig. 5 zeigt eine Ansicht von Fig. 4 mit drei Ringen 8, 9, 10, von denen der Ring 8 bereits die Grundstellung erreicht hat, während die Ringe 9 und 10 noch zurückzudrehen sind. Es ist deutlich zu erkennen, dass die Ringe bei ihrem Herumschleudern gegen die Anschlagkante 3 anschlagen, so dass diese eine Rückdrehung der Ringe 9 und 10 bewirkt. Da die Stellung des Rings 8 die stabilste Stellung eines Ringes darstellt, hat sein Anschlagen an den Anschlagstab 3 keine weiteren Auswirkungen.

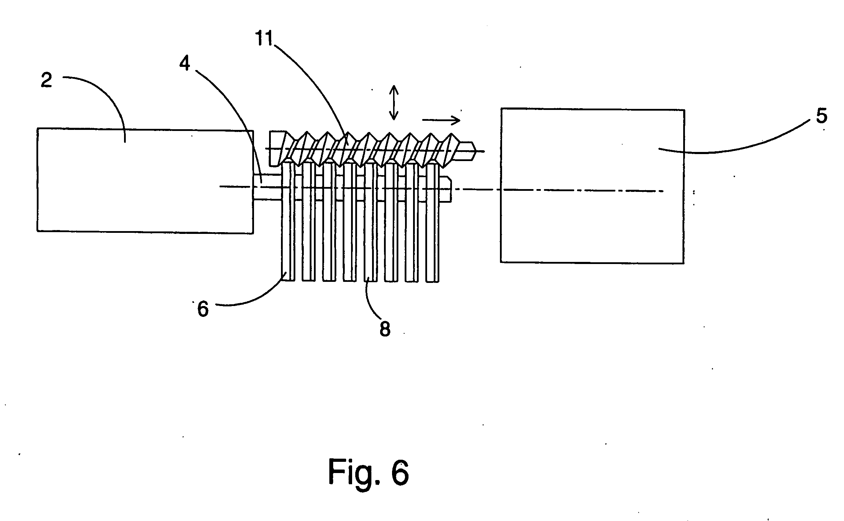

In einer in Fig. 6 gezeigten Ausführungsform wird eine Spindel 11 nach Beendigung des Zurückdrehens der Ringe parallel an den Drehstab herangeführt, bis die Ringe in die Schraubenvertiefung der Spindel eingreifen. Durch Drehung der Spindel werden die Ringe dann in Schraubrichtung von dem Drehstab abgezogen.

Die Spindel 11 kann auch die Funktion der Anschlagkante oder Wand einnehmen, so dass die Spindel lediglich in zwei Stellungen (Stellung als Anschlagkante, Stellung als Abzugsspindel) zu verschieben ist. Anstelle einer Verschiebung der Spindel bzw. Anschlagkante kann auch der Drehstab zwischen zwei Stellungen verschoben werden.

In einer weiteren Ausführungsform kann der Drehstab selbst mit einem Schraubgewinde versehen sein. Bei schneller Drehung des Drehstabes werden die Ringe mit entsprechender Drehgeschwindigkeit herumgeschleudert.

Bei langsamer Drehung werden die Ringe jedoch in hängendem Zustand über das Schraubgewinde wandern und vom freien Ende des Drehstabes geordnet abfallen.

Mit dem erfindungsgemäßen Verfahren und der erfindungsgemäßen Einrichtung ist es auf einfache Weise möglich, verdrehte Ringe in ihre stabile Ausgangslage zurückzuführen. Ein manuelles Zurückdrehen ist nicht mehr erforderlich.

### Bezugszeichen

- 1: Ring
- 2: Motor
- 3: Anschlagkante
- 4: Drehstab
- 5: Fertigungseinrichtung
- 6: Ring in Grundstellung
- 7: Ring in verdrehter Stellung
- 8: Ring in Grundstellung
- 9: Ring in verdrehter Stellung
- 10: Ring in verdrehter Stellung
- 11: Spindel

## Patentansprüche

1. Verfahren zur Rückdrehung von teilverdrehten flexiblen Gummi- oder Kunststoffringen, insbesondere Dichtungsringen für Abwasserrohre, in eine stabile, in Umfangsrichtung gleichgerichtete Grundstellung, **dadurch gekennzeichnet, dass** die teilverdrehten Ringe (1, 7, 9, 10) mittels eines exzentrisch zur Ringachse angeordneten Drehantriebs, wobei der Drehantriels als Drehstob (4) ausgebildet ist, solange in eine Schleuderdrehung versetzt werden, bis die Ringe in eine stabile, umlaufend gleichförmige Grundstellung erreicht haben

2. Verfahren nach Anspruch 1, **dadurch gekennzeichnet, dass** eine Anzahl Ringe (6 - 10) parallel zueinander auf den Drehstab (4) überführbar sind und durch Drehung des Drehstabes (4) in Schleuderbewegung versetzt werden.

3. Verfahren nach Anspruch 1, **dadurch gekennzeichnet, dass** die Ringe während der Schleuderbewegung eine Anschlagkante (3) berühren.

4. Verfahren nach einem oder mehreren der vorhergehenden Ansprüche, **dadurch gekennzeichnet, dass** die Ringe mit einer Drehzahl von 500 bis 1500 Umdrehungen pro Minute geschleudert werden.

5. Verfahren nach Anspruch 1 oder 4, **dadurch gekennzeichnet, dass** die Ringe für einen Zeitraum von 10 bis 30 sec geschleudert werden.

6. Verfahren nach einem oder mehreren der vorhergehenden Ansprüche, **dadurch gekennzeichnet, dass** die Ringe während des Herumschleuderns mit einer Silikonbeschichtung besprüht werden.

7. Verfahren nach Anspruch 2, **dadurch gekennzeichnet, dass** nach Erreichen der Grundstellung der Ringe eine mit einer spiralförmigen Vertiefung versehene Spindel (11) parallel an den Drehstab herangeführt wird, wobei die Ringe in eine Vertiefung der Spindel eintreten und bei Drehung der Spindel (11) von dem Drehstab abgezogen werden.

8. Einrichtung zur Rückdrehung von teilverdrehten ringförmigen flexiblen Gummi- oder Kunststoffringen zur Durchführung des Verfahrens nach Anspruch 1, **dadurch gekennzeichnet, dass** ein für einen gegebenen Zeitraum motorisch in Drehung versetzbarer Drehstab (4) zur hängenden Aufnahme der Ringe vorgesehen ist, und dass eine Anschlagkante (3) vorgesehen ist, die parallel zum Drehstab in einem solchen Abstand von dem Drehstab angeordnet ist, dass die durch den Drehstab (4) in Schleuderdrehung versetzten Ringe (6 - 10) nach Erreichen einer bestimmten Drehzahl gegen die Anschlagkante (3) schlagen, während sie auf dem Drehstab gehalten werden.

9. Einrichtung nach Anspruch 8, **dadurch gekennzeichnet, dass** der Drehstab (4) mit einer in Umfangsrichtung ungleichmäßigen Oberfläche ode im Querschnitt als Dreieck, Viereck, Vieleck, oval oder als exzentrisch drehender Stab ausgebildet ist.

10. Einrichtung nach Anspruch 8, **dadurch gekennzeichnet, dass** der Drehstab (4) einseitig in einer Antriebseinheit (2) gelagert ist und dass die Ringe von einem freien Ende des Drehstabes (4) her auf den Drehstab aufschiebbar und davon abnehmbar sind.

11. Einrichtung nach Anspruch 10, **dadurch gekennzeichnet, dass** das freie Ende des Drehstabes an ein Abgabeende einer Fertigungseinrichtung (5) zur Herstellung von Gummi- oder Kunststoffringen heranführbar ist, um die Ringe unmittelbar von der Fertigungseinrichtung zu übernehmen.

12. Einrichtung nach einem der Ansprüche 10 oder 11, **dadurch gekennzeichnet, dass** die Oberfläche des Drehstabes ein Schraubgewinde aufweist, und dass der Drehstab mit einer ersten Drehgeschwindigkeit zum Herumschleudern der Ringe und einer zweiten Drehgeschwindigkeit zum Ableiten der Ringe von dem Drehstab in hängendem Zustand antreibbar ist.

## Claims

1. Method for untwisting partially twisted, flexible rubber or plastic rings, particularly sealing rings for waste water pipes, into a stable basic position aligned in the peripheral direction,
**characterised in that**
the partially twisted rings (1, 7, 9, 10) are set in spinning rotation by means of a rotating drive arranged eccentrically to the axis of the ring, said rotating drive being constructed as a rotating bar (4), until the rings have reached a stable, circumferentially uniform basic position.

2. Method according to claim 1,
**characterised in that**
a number of rings (6 - 10) can be transferred, parallel to one another, onto the rotating bar (4) and are set in spinning motion as a result of rotation of said rotating bar (4).

3. Method according to claim 1,
**characterised in that**
the rings touch a stop edge (3) during the spinning motion.

4. Method according to one or more of the preceding claims,
**characterised in that**
the rings are spun at a rotational speed of 500 to 1500 revolutions per minute.

5. Method according to claim 1 or 4,
**characterised in that**
the rings are spun for a period of 10 to 30 seconds.

6. Method according to one or more of the preceding claims,
**characterised in that**
the rings are sprayed with a silicone coating while being spun round.

7. Method according to claim 2,
**characterised in that**,
after the rings have reached the basic position, a spindle (11) provided with a helical depression is brought up to the rotating bar in a parallel manner, under which circumstances the rings pass into a depression in the spindle and are drawn off from the rotating bar when the spindle (11) rotates.

8. Device for untwisting partially twisted, annular, flexible rubber or plastic rings for the purpose of performing the method according to claim 1,
**characterised in that**
a rotating bar (4), which can be set in rotation in a motorised manner for a given period of time, is provided for the purpose of receiving the rings in a suspended manner, and that a stop edge (3) is provided which is arranged, parallel to the rotating bar, at a distance from said rotating bar such that the rings (6 - 10) which are set in spinning rotation by the rotating bar (4) strike against the stop edge (3) after reaching a certain rotational speed, while they are retained on said rotating bar.

9. Device according to claim 8,
**characterised in that**
the rotating bar (4) is constructed with a surface which is non-uniform in the peripheral direction, or is constructed, in cross-section, as a triangle, quadrilateral, polygon or oval, or as an eccentrically rotating bar.

10. Device according to claim 8,
**characterised in that**
the rotating bar (4) is mounted, at one end, in a driving unit (2), and that the rings can be pushed onto, and removed from, the rotating bar (4) from a free end of the latter.

11. Device according to claim 10,
**characterised in that**
the free end of the rotating bar can be brought up to a delivery end of a production apparatus (5) for manufacturing rubber or plastic rings, so as to take over the rings directly from said production apparatus.

12. Device according to either of claims 10 or 11,
**characterised in that** the surface of the rotating bar has a screw thread, and that said rotating bar can be driven at a first speed of rotation for spinning the rings round, and at a second speed of rotation for conveying the rings away from the rotating bar in the suspended state.

## Revendications

1. Procédé pour dévriller des anneaux flexibles en caoutchouc ou en matière plastique en partie vrillés, en particulier des anneaux d'étanchéité pour canalisations d'eaux usées, et les ramener dans une position de base stable, redressée dans le sens circonférentiel, **caractérisé en ce que** les anneaux en partie vrillés (1, 7, 9, 10) sont soumis à une centrifugation à l'aide d'un entraînement rotatif disposé de manière excentrée par rapport à l'axe des anneaux - étant précisé que ledit entraînement rotatif est conçu comme une tige rotative (4) - jusqu'à ce que les anneaux aient atteint une position de base stable, uniforme sur leur circonférence.

2. Procédé selon la revendication 1, **caractérisé en ce qu'**un certain nombre d'anneaux (6-10) sont aptes à être amenés, parallèlement les uns par rapport aux autres, sur la tige rotative (4) et sont soumis grâce à la rotation de celle-ci à une centrifugation.

3. Procédé selon la revendication 1, **caractérisé en ce que** les anneaux, pendant la centrifugation, touchent un bord de butée (3).

4. Procédé selon l'une au moins des revendications précédentes, **caractérisé en ce que** les anneaux sont centrifugés à une vitesse de rotation de 500 à 1500 tours par minute.

5. Procédé selon la revendication 1 ou 4, **caractérisé en ce que** les anneaux sont centrifugés pendant une durée de 10 à 30 s.

6. Procédé selon l'une au moins des revendications précédentes, **caractérisé en ce que** les anneaux, pendant la centrifugation, sont aspergés d'un revêtement en silicone.

7. Procédé selon la revendication 2, **caractérisé en ce que**, après que la position de base des anneaux a été atteinte, une broche (11) pourvue d'un creux en spirale est approchée, parallèlement, de la tige rotative, étant précisé que les anneaux entrent dans un creux de la broche et, lorsque celle-ci tourne, sont retirés de la tige rotative.

8. Dispositif pour dévriller des anneaux flexibles en caoutchouc ou en matière plastique en partie vrillés, pour la mise en oeuvre du procédé selon la revendication 1, **caractérisé en ce qu'**il est prévu une tige rotative (4) apte à mise en rotation à l'aide d'un moteur pour une durée donnée, pour recevoir de manière suspendue les anneaux, et **en ce qu'**il est prévu un bord de butée (3) qui est disposé parallèlement à la tige rotative à une distance de celle-ci qui est telle que les anneaux (6-10) soumis par ladite tige rotative (4) à la centrifugation butent contre le bord de butée (3), après qu'un nombre de rotations défini a été atteint, tandis qu'ils sont maintenus sur la tige rotative.

9. Dispositif selon la revendication 8, **caractérisé en ce que** la tige rotative (4) est pourvue d'une surface irrégulière, dans le sens circonférentiel, ou présente en coupe transversale la forme d'un triangle, d'un rectangle, d'un polygone, d'un ovale ou d'une tige à rotation excentrique.

10. Dispositif selon la revendication 8, **caractérisé en ce que** la tige rotative (4) est montée unilatéralement dans une unité d'entraînement (2), et **en ce que** les anneaux sont aptes à être enfilés sur la tige rotative et à en être enlevés à partir d'une extrémité libre de ladite tige rotative (4).

11. Dispositif selon la revendication 10, **caractérisé en ce que** l'extrémité libre de la tige rotative est apte à être approchée d'une extrémité de sortie d'un dispositif de production (5) pour la fabrication d'anneaux en caoutchouc ou en matière plastique, afin de prendre les anneaux directement sur le dispositif de production.

12. Dispositif selon l'une des revendications 10 ou 11, **caractérisé en ce que** la surface de la tige rotative présente un filetage et **en ce que** la tige rotative est apte à être entraînée à une première vitesse de rotation pour la centrifugation des anneaux, et à une seconde vitesse de rotation pour évacuer les anneaux de la tige rotative, à l'état suspendu.
